# EUROPEAN PATENT SPECIFICATION

(11) **EP 2 171 002 B1**
(45) Date of publication and mention of the grant of the patent: **02.04.2014**
(21) Application number: 08774581.6
(22) Date of filing: 01.07.2008
(51) Int. Cl.: C09C 1/30, C09D 7/00, C08K 9/06, B82Y 30/00, C08K 3/36, C09D 7/12, C09D 11/02

(54) **SURFACE-MODIFIED, PYROGENICALLY PREPARED SILICAS**
OBERFLÄCHENMODIFIZIERTE UND PYROGEN HERGESTELLTE KIESELERDEN
SILICES À SURFACE MODIFIÉE PYROGÉNIQUEMENT PRÉPARÉES

(30) Priority: 30.07.2007 DE 102007035951
(43) Date of publication of application: 07.04.2010
(73) Proprietor: Evonik Degussa GmbH, 45128 Essen (DE)
(72) Inventor: MEYER, Jürgen, 63811 Stockstadt (DE); SCHOLZ, Mario, 63584 Gründau (DE); SCHUMACHER, Kai, 65719 Hofheim (DE)
(86) International application number: PCT/EP2008/058435
(87) International publication number: WO 2009/015971

(56) References cited:
- EP-A- 1 304 332
- EP-A- 1 304 361
- EP-A- 1 431 245
- EP-A- 1 693 343
- US-A- 5 900 315
- US-A1- 2003 138 715
- US-A1- 2004 131 527
- US-A1- 2005 241 531

## Description

The invention relates to surface-modified, pyrogenically prepared silicas, to a process for preparing them and to their use.

The preparation of surface-modified pyrogenic (fumed) silicas from pyrogenically prepared silicas by surface modification is known. Silicas prepared in this way find use in many fields of application: for example, for controlling the rheology of liquid systems, in resins, and for use in adhesives. In these applications, great importance attaches not only to the thickening effect but also to the ease of incorporation into the liquid system.

The known surface-modified, pyrogenic silicas have the disadvantage that their ease of incorporation into liquid systems is unsatisfactory.

The object was therefore to prepare surface-modified pyrogenic silicas which possess an improved ease of incorporation into liquid systems without detriment to other important properties, such as the thickening effect.

The invention provides a surface-modified, pyrogenically prepared silica which is characterized in that its ease of incorporation into liquid systems is improved without detriment to the thickening effect.

The invention further provides a process for preparing the surface-modified, pyrogenically prepared silica, which is characterized in that the pyrogenically prepared silica, which is in the form of aggregates of primary particles and possesses a BET surface area of 200 ± 25 m²/g, the aggregates having an average area of 7000 to 12 000 nm², an average equivalent circle diameter (ECD) of 80 to 100 nm and an average circumference of 850 to 1050 nm, is surface-modified in a known way.

The pyrogenically prepared silica used as starting material is known from EP 1 693 343.

The surface modification can be accomplished by spraying the silicas where appropriate with water and subsequently with the surface modifier. Spraying may also take place in the opposite order. The water used may have been acidified with an acid, hydrochloric acid, for example, to a pH of 7 to 1. If two or more surface modifiers are employed, they can be applied together, or separately, in succession or as a mixture.

The surface modifier or modifiers may have been dissolved in suitable solvents. The end of spraying may be followed by mixing for 5 to 30 minutes more.

The mixture is subsequently treated thermally at a temperature of 20 to 400°C over a period of 0.1 to 6 h. The thermal treatment may take place under inert gas, such as nitrogen, for example.

An alternative method of surface modification of the silicas can be accomplished by treating the silicas with the surface modifier in vapour form and then thermally treating the mixture at a temperature of 50 to 800°C over a period of 0.1 to 6 h. The thermal treatment may take place under inert gas, such as nitrogen, for example.

The temperature treatment may also take place over a number of stages at different temperatures.

The surface modifier or modifiers can be applied using single-fluid, two-fluid or ultrasound nozzles.

The surface modification can be carried out in heatable mixers and dryers with spraying installations, continuously or batchwise. Suitable apparatus may for example be the following: ploughshare mixers, plate dryers, fluidized-bed dryers or fluid-bed dryers.

As surface modifier it is possible to use at least one compound from the group of the following compounds:
a) organosilanes of type (RO)₃Si(CₙH₂ₙ₊₁) and (RO)₃Si(CₙH₂ₙ₋₁)
- R: = alkyl, such as for example, methyl-, ethyl-, n-propyl-, isopropyl-, butyl-
- n: = 1 - 20

b) organosilanes of type R'ₓ(RO)_{y}Si(CₙH₂ₙ₊₁) and R'ₓ(RO)_{y}Si(CₙH₂ₙ₋₁)
- R: = alkyl, such as for example, methyl-, ethyl-, n-propyl-, isopropyl-, butyl-
- R': = alkyl, such as for example, methyl-, ethyl-, n-propyl-, isopropyl-, butyl-
- R': = cycloalkyl
- n: = 1 - 20
- x+y: = 3
- x: = 1, 2
- y: = 1, 2

c) haloorganosilanes of type X₃Si(CₙH₂ₙ₊₁) and X₃Si(CₙH₂ₙ₋₁)
- X: = Cl, Br
- n: = 1 - 20

d) haloorganosilanes of type X₂(R')Si(CₙH₂ₙ₊₁) and X₂(R')Si(CₙH₂ₙ₋₁)
- X: = Cl, Br
- R': = alkyl, such as for example, methyl-, ethyl-, n-propyl-, isopropyl-, butyl-
- R': = cycloalkyl
- n: = 1 - 20

e) haloorganosilanes of type X(R')₂Si(CₙH₂ₙ₊₁) and X(R')₂Si(CₙH₂ₙ₋₁)
- X: = Cl, Br
- R': = alkyl, such as for example, methyl-, ethyl-, n-propyl-, isopropyl-, butyl-
- R': = cycloalkyl
- n: = 1 - 20

f) organosilanes of type (RO)₃Si(CH₂)ₘ-R'
- R: = alkyl, such as methyl-, ethyl-, propyl-
- m: = 0.1 - 20
- R': = methyl-, aryl (for example -C₆H₅, substituted phenyl radicals)
-C₄F₉, -OCF₂-CHF-CF₃, -C₆F₁₃, -O-CF₂-CHF₂ -NH₂, -N₃, -SCN, -CH=CH₂, -NH-CH₂-CH₂-NH₂, -N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si(OR)₃
-SH
-NR'R''R''' (R' = alkyl, aryl; R" = H, alkyl, aryl; R"' = H, alkyl, aryl, benzyl, C₂H₄NR"" R"" with R"" = H, alkyl and R""' = H, alkyl)

g) organosilanes of type (R")ₓ(RO)_{y}Si(CH₂)ₘ-R'

| | | |
|---|---|---|
| R" | = alkyl | x+y = 3 |
| | = cycloalkyl | x = 1, 2 |
| | | y = 1, 2 |
| | | m = 0.1 to 20 |
| R' | = methyl-, aryl (for example -C₆H₅, substituted phenyl radicals) | |
| | | -C₄F₉, -OCF₂-CHF-CF₃, -C₆F₁₃, -O-CF₂-CHF₂ |
| | | -NH₂, -N₃, -SCN, -CH=CH₂, -NH-CH₂-CH₂-NH₂, |
| | | -N-(CH₂-CH₂-NH₂)₂ |
| | | -OOC(CH₃)C = CH₂ |
| | | -OCH₂-CH(O)CH₂ |
| | | -NH-CO-N-CO-(CH₂)₅ |
| | | -NH-COO-CH₃, -NH-COO-CH₂-CH₃, -NH-(CH₂)₃Si-(OR)₃ |
| | | -Sₓ-(CH₂)₃Si(OR)₃ |
| | | -SH |
| | | -NR' R" R"' (R' = alkyl, aryl; R" = H, alkyl, aryl; R'" = H, alkyl, aryl, benzyl, C₂H₄NR"" R"'" with R"" = H, alkyl and R""' = H, alkyl) |

h) haloorganosilanes of type X₃Si(CH₂)ₘ-R'
- X =: Cl, Br
- m =: 0.1 - 20
- R' =: methyl-, aryl (for example -C₆H₅, substituted phenyl radicals)
-C₄F₉, -OCF₂-CHF-CF₃, -C₆F₁₃, -O-CF₂-CHF₂
-NH₂, -N₃, -SCN, -CH=CH₂,
-NH-CH₂-CH₂-NH₂
-N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si(OR)₃
-SH

i) haloorganosilanes of type (R) X₂Si(CH₂)ₘ-R'
- X =: Cl, Br
- R =: alkyl, such as methyl-, ethyl-, propyl-
- m =: 0.1 - 20
- R =: methyl-, aryl (e.g. -C₆H₅, substituted phenyl radicals)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂,
-N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃, it being possible for R to be methyl-, ethyl-, propyl-, butyl-
-Sₓ-(CH₂)₃Si(OR)₃, it being possible for R to be methyl-, ethyl-, propyl-, butyl--SH

j) haloorganosilanes of type (R)₂XSi(CH₂)ₘ-R'
- X: = Cl, Br
- R: = alkyl
- m: = 0.1 - 20
- R': = methyl-, aryl (e.g. -C₆H₅, substituted phenyl radicals)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂,
-N- (CH₂-CH₂-NH₂) ₂
-OOC (CH₃) C = CH₂
-OCH₂-CH(O)CH₂
-NH-CO-N-CO-(CH₂)₅
-NH-COO-CH₃, -NH-COO-CH₂-CH₃, -NH-(CH₂) ₃Si (OR) ₃
-Sₓ-(CH₂)₃Si-(OR)₃
-SH

k) silazanes of type 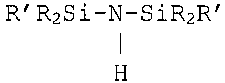
- R: = alkyl, vinyl, aryl
- R': = alkyl, vinyl, aryl

l) cyclic polysiloxanes of type D 3, D 4, D 5, with D 3, D 4 and D 5 meaning cyclic polysiloxanes having 3, 4 or 5 units of type -O-Si(CH₃)₂-.
e.g. octamethylcyclotetrasiloxane = D 4 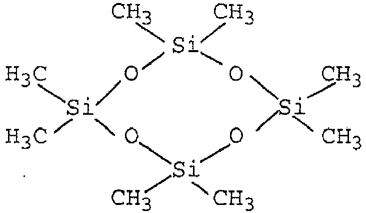
m) polysiloxanes or silicone oils of type

| | |
|---|---|
| 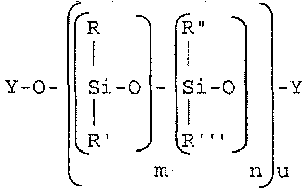 | m = 0,1,2,3,...∞ |
| | n = 0,1,2,3,...∞ |
| | u = 0,1,2,3,...∞ |
| | Y=CH₃, H, CₙH₂ₙ₊₁ n=1-20 |
| | Y=Si(CH₃)₃, Si(CH₃)₂H |
| | Si(CH₃)₂OH, Si(CH₃)₂(OCH₃) |
| | Si(CH₃)₂(CₙH₂ₙ₊₁) n=1-20 |

- R: = alkyl such as CₙH₂ₙ₊₁, n being 1 to 20, aryl, such as phenyl radicals and substituted phenyl radicals, (CH₂)ₙ-NH₂, H
- R': = alkyl such as CₙH₂ₙ₊₁, n being 1 to 20, aryl, such as phenyl radicals and substituted phenyl radicals, (CH₂)ₙ-NH₂, H
- R" =: alkyl such as CₙH₂ₙ₊₁, n being 1 to 20, aryl, such as phenyl radicals and substituted phenyl radicals, (CH₂)ₙ-NH₂, H
- R"' =: alkyl such as CₙH₂ₙ₊₁, n being 1 to 20, aryl, such as phenyl radicals and substituted phenyl radicals, (CH₂)ₙ-NH₂, H

As surface modifiers it is preferred to use the following silanes:
octyltrimethoxysilane, octyltriethoxysilane, hexamethyldisilazane, 3-methacryloyloxypropyltrimethoxysilane, 3-methacryloyloxypropyltriethoxysilane, hexadecyltrimethoxysilane, hexadecyltriethoxysilane, dimethylpolysiloxane, glycidyloxypropyltrimethoxy-silane, glycidyloxypropyltriethoxysilane, nonafluorohexyltrimethoxysilane, tridecafluorooctyltrimethoxysilane, tridecafluorooctyltriethoxysilane, aminopropyltriethoxysilane, hexamethyldisilazane.

With particular preference it is possible to use hexamethyldisilazane, hexadecyltrimethoxysilane, dimethylpolysiloxane, octyltrimethoxysilane and octyltriethoxysilane.

More particularly it is possible to use hexamethyldisilazane, octyltrimethoxysilane and hexadecyltrimethoxysilane.

The surface-modified, pyrogenically prepared silica of the invention can be used as a filler for resins.

The surface-modified, pyrogenically prepared silica of the invention can be used as a filler for paints and inks.

The invention further provides resins which comprise the surface-modified, pyrogenically prepared silica of the invention.

The invention further provides paints and inks which comprise the surface-modified, pyrogenically prepared silica of the invention.

The invention features the following advantages: greater ease of incorporation into liquid systems without detriment to the thickening effect.

### Examples

### Preparation of the comparative silicas - Example 1

2 kg of AEROSIL^{®} 200 were charged to a mixer and, with mixing, were sprayed first with 0.021 kg of aqueous hydrochloric acid (pH = 1) and subsequently with 0.32 kg of Dynasylan^{®} OCTMO (octyltrimethoxysilane) by means of a two-fluid nozzle. After the end of spraying, mixing was continued for 15 minutes. The reaction mixture was subsequently heated under a nitrogen atmosphere.

### Preparation of the comparative silicas - Example 2

2 kg of AEROSIL^{®} 200 were charged to a mixer and, with mixing, were sprayed with 0.04 kg of Dynasylan^{®} 9116 (hexadecyltrimethoxysilane). After the end of spraying, mixing was continued for 15 minutes. The reaction mixture was subsequently heated under a nitrogen atmosphere.

### Preparation of the inventive silicas - Example 1

2 kg of silica 2 (Table 4 from EP 1 693 343) were charged to a mixer and, with mixing, were sprayed first with 0.021 kg of aqueous hydrochloric acid (pH = 1) and subsequently with 0.32 kg of Dynasylan^{®} OCTMO (octyltrimethoxysilane) by means of a two-fluid nozzle. After the end of spraying, mixing was continued for 15 minutes. The reaction mixture was subsequently heated under a nitrogen atmosphere.

### Preparation of the inventive silicas - Example 2

2 kg of silica 2 (Table 4 from EP 1 693 343) were charged to a mixer and, with mixing, were sprayed with 0.04 kg of Dynasylan^{®} 9116 (hexadecyltrimethoxysilane). After the end of spraying, mixing was continued for 15 minutes. The reaction mixture was subsequently heated under a nitrogen atmosphere.

### Physicochemical data

| Designation | Tapped density [g/l] | Loss on drying [%] | Loss on ignition [%] | pH | C content [%] | BET specific surface area |
|---|---|---|---|---|---|---|
| Comparative silica Example 1 | 64 | 0.2 | 7.5 | 5.2 | 6.1 | 151 |
| Comparative silica Example 2 | 58 | 0.6 | 1.7 | 4.5 | 1.2 | 176 |
| Inventive silica Example 1 | 61 | 0.2 | 7.5 | 5.4 | 6.1 | 149 |
| Inventive silica Example 2 | 62 | 0.4 | 1.6 | 4.3 | 1.1 | 180 |

### Determination of incorporation characteristics

The incorporation characteristics were determined by measuring the time required for the silica to be homogenized in a resin.

This is done by weighing out 100 g of Palatal A 410 into a 350 ml beaker and heating it at 25°C in a water bath.

The beaker is introduced into the aluminium insert of the mounting device of the dissolver (Getzmann Dispermat) .

The stirrer (disc diameter 30 mm) is immersed to its target depth of t = 10 mm above the base of the beaker, and switched on at a speed n of 500 min⁻¹.

3 g of silica are placed uniformly onto the surface of the resin, and the stopwatch is started.

A measurement is made of the time required for the silica to be homogenized.

The elapsed time is translated into a school-grade system (grade 1 - grade 5). Grade 1 corresponds to very good (rapid) incorporation. Grade 5 corresponds to very poor (slow) incorporation.

### Determination of thickening effect in an epoxy resin

201.92 g (92.15%) of Renlam M1 and 8.08 g (3.85%) of silica are weighed out into a 350 ml PE beaker.

The dissolver disc (disc diameter: d = 50 mm) is immersed to the middle point of the beaker and the sample is homogenized at 1000 rpm.

In this case the beaker is sealed with the perforated lid in order to prevent the silica escaping as dust.

As soon as the silica has been fully incorporated, the disc is immersed to a depth of 10 mm above the base of the beaker. Dispersion is carried out for 3 minutes at a speed of 3000 rpm. During this time, air is removed under vacuum.

The dispersed sample is transferred to a 250 ml glass bottle.

The sample is stored in a water bath at 25°C for 90 minutes.

After 90 minutes the sample is agitated with a spatula for 1 minute. Subsequently the viscosity of the sample is determined using a Brookfield DV III.

For this purpose the spindle of the Brookfield rheometer is immersed to the defined mark. Measurement is carried out as follows:
5 rpm - value read off after 60 seconds
50 rpm - value read off after 30 seconds.

The values read off are the viscosities [Pa*s] at the respective rpm.

### Incorporation characteristics and thickening effect - results

| Designation | Incorporation (grade) | Thickening at 5 rpm [Pa*s] | Thickening at 50 rpm [Pa*s] |
|---|---|---|---|
| Comparative silica Example 1 | 3 | 35 200 | 10 020 |
| Inventive silica Example 1 | 1 | 34 400 | 9860 |
| Blank sample Renlam M1 | - | 1700 | 1694 |

It is clearly apparent that the inventive silica exhibits much better incorporation characteristics. This means that it is incorporated more rapidly than the comparative silica, despite the fact that not only the thickening effect but also the other physicochemical data are comparable.

## Claims

1. Surface-modified, pyrogenically prepared silica with improved ease of incorporation into liquid systems obtainable in that a pyrogenically prepared silica, which is in the form of aggregates of primary particles and possesses a BET surface area of 200 ± 25 m²/g, the aggregates having an average area of 7000 to 12 000 nm², an average equivalent circle diameter (ECD) of 80 to 100 nm and an average circumference of 850 to 1050 nm, is treated with octyltrimethoxysilane or hexadecyltrimethoxysilane as a surface modifier.

2. Process for preparing the surface-modified, pyrogenically prepared silica as defined in Claim 1, **characterized in that** a pyrogenically prepared silica, which is in the form of aggregates of primary particles and possesses a BET surface area of 200 ± 25 m²/g, the aggregates having an average area of 7000 to 12 000 nm², an average equivalent circle diameter (ECD) of 80 to 100 nm and an average circumference of 850 to 1050 nm, is treated with octyltrimethoxysilane or hexadecyltrimethoxysilane as a surface modifier.

3. Process according to Claim 2, **characterized in that** the silica is sprayed with water and subsequently with the surface modifier.

4. Process according to Claim 2, **characterized in that** the silica is treated with the surface modifier in vapour form and the mixture is subsequently treated thermally at a temperature of 50 to 800°C over a period of 0.1 to 6 h.

5. Use of the surface-modified, pyrogenically prepared silica as defined in Claim 1 for thickening liquid systems.

6. Use of the surface-modified, pyrogenically prepared silica as defined in Claim 1 for thickening resins.

7. Use of the surface-modified, pyrogenically prepared silica as defined in Claim 1 for controlling the rheology of paints and inks.

## Patentansprüche

1. Oberflächenmodifizierte, pyrogen hergestellte Kieselsäure mit verbesserter Einarbeitbarkeit in flüssige Systeme, dadurch erhaltbar, dass man pyrogen hergestellte Kieselsäure, die in Form von Aggregaten von Primärpartikeln vorliegt und eine BET-Oberfläche von 200±25 m²/g besitzt, wobei die Aggregate eine mittlere Fläche von 7000 bis 12000 nm², einen mittleren, äquivalenten Kreisdurchmesser (ECD = Equivalent Circle Diameter) von 80 bis 100 nm und einen mittleren Umfang von 850 bis 1050 nm aufweisen, mit Octyltrimethoxysilan oder Hexadecyltrimethoxysilan als Oberflächenmodifizierungsmittel behandelt.

2. Verfahren zur Herstellung der oberflächenmodifizierten, pyrogen hergestellten Kieselsäure gemäß Anspruch 1, **dadurch gekennzeichnet, dass** man eine pyrogen hergestellte Kieselsäure, die in Form von Aggregaten von Primärpartikeln vorliegt und eine BET-Oberfläche von 200±25 m²/g besitzt, wobei die Aggregate eine mittlere Fläche von 7000 bis 12000 nm², einen mittleren, äquivalenten Kreisdurchmesser (ECD = Equivalent Circle Diameter) von 80 bis 100 nm und einen mittleren Umfang von 850 bis 1050 nm aufweisen, mit Octyltrimethoxysilan oder Hexadecyltrimethoxysilan als Oberflächenmodifizierungsmittel behandelt.

3. Verfahren nach Anspruch 2, **dadurch gekennzeichnet, dass** man die Kieselsäuren gegebenenfalls mit Wasser und anschließend mit dem Oberflächenmodifizierungsmittel besprüht.

4. Verfahren nach Anspruch 2, **dadurch gekennzeichnet, dass** man die Kieselsäuren mit dem Oberflächenmodifizierungsmittel in Dampfform behandelt und das Gemisch anschließend bei einer Temperatur von 50 bis 800 °C über einen Zeitraum von 0,1 bis 6 h thermisch behandelt.

5. Verwendung der oberflächenmodifizierten, pyrogen hergestellten Kieselsäure gemäß Anspruch 1 zur Verdickung von flüssigen Systemen.

6. Verwendung der oberflächenmodifizierten, pyrogen hergestellten Kieselsäure gemäß Anspruch 1 zur Verdickung von Harzen.

7. Verwendung der oberflächenmodifizierten, pyrogen hergestellten Kieselsäure gemäß Anspruch 1 zur Rheologiesteuerung von Lacken und Farben.

## Revendications

1. Silice préparée par voie pyrogène modifiée en surface avec une facilité accrue d'incorporation dans des systèmes liquides pouvant être obtenue en ce qu'une silice préparée par voie pyrogène, qui se présente sous la forme d'agrégats de particules primaires et possède une surface spécifique BET de 200 ± 25 m²/g, les agrégats ayant une surface moyenne de 7000 à 12 000 nm², un diamètre de cercle équivalent (ECD) moyen de 80 à 100 nm et une circonférence moyenne de 850 à 1050 nm, est traitée avec de l'octyltriméthoxysilane ou de l'hexadécyl-triméthoxysilane en tant qu'agent de modification de surface.

2. Procédé de préparation de la silice préparée par voie pyrogène modifiée en surface telle que définie dans la revendication 1, **caractérisé en ce qu'**une silice préparée par voie pyrogène, qui se présente sous la forme d'agrégats de particules primaires et possède une surface spécifique BET de 200 ± 25 m²/g, les agrégats ayant une surface moyenne de 7000 à 12 000 nm², un diamètre de cercle équivalent (ECD) moyen de 80 à 100 nm et une circonférence moyenne de 850 à 1050 nm, est traitée avec de l'octyltriméthoxysilane ou de l'hexadécyl-triméthoxysilane en tant qu'agent de modification de surface.

3. Procédé selon la revendication 2, **caractérisé en ce que** la silice est pulvérisée avec de l'eau puis avec l'agent de modification de surface.

4. Procédé selon la revendication 2, **caractérisé en ce que** la silice est traitée avec l'agent de modification de surface sous forme de vapeur et le mélange est ensuite traité thermiquement à une température de 50 à 800 °C sur une période de 0,1 à 6 h.

5. Utilisation de la silice préparée par voie pyrogène modifiée en surface telle que définie dans la revendication 1 pour l'épaississement de systèmes liquides.

6. Utilisation de la silice préparée par voie pyrogène modifiée en surface telle que définie dans la revendication 1 pour l'épaississement de résines.

7. Utilisation de la silice préparée par voie pyrogène modifiée en surface telle que définie dans la revendication 1 pour le contrôle de la rhéologie de peintures et d'encres.
